# EUROPEAN PATENT SPECIFICATION

(11) **EP 0 488 520 B1**
(45) Date of publication and mention of the grant of the patent: **15.03.1995**
(21) Application number: 91309815.8
(22) Date of filing: 23.10.1991
(51) Int. Cl.: B01D 33/04, B01D 33/50, B01D 33/54, B01D 33/76

(54) **System and method for cleaning an intake screen disposed between a channel and a body of water**
Vorrichtung und Verfahren zur Reinigung eines zwischen einem Kanal und einer Wassermasse angeordneten Einlassfilters
Dispositif et procédé pour le nettoyage d'un filtre d'admission placé entre un canal et un plan d'eau

(30) Priority: 26.10.1990 US 603488
(43) Date of publication of application: 03.06.1992
(73) Proprietor: WESTINGHOUSE ELECTRIC CORPORATION, Pittsburgh Pennsylvania 15222 (US)
(72) Inventor: Franklin, Richard Dale, Hemet, CA 92343 (US); Murray, David Edward, Ruffs Dale, PA 15679 (US); Auld, Gregg Daniel, Trafford, PA 15085 (US)
(74) Representative: van Berlyn, Ronald Gilbert

(56) References cited:
- EP-A- 0 029 222
- EP-A- 0 077 086
- WO-A-90/06800
- WO-A-91/08819
- US-A- 4 255 261

## Description

This invention generally relates to systems and methods for cleaning an intake screen disposed between a channel and a body of water, and more particularly relates to a pressure pulse generator to loosen and dislodge debris trapped in an intake screen disposed between a man-made channel leading to a nuclear or fossil fuel power plant and a body of water such as a lake or ocean.

Devices for cleaning such intake screens are known in the prior art. However, before one can appreciate the purposes, advantages and limitations associated with such prior art screen cleaning devices, one must first at least generally understand the structure and function of such intake screens.

The principle purpose of the intake screens which concern this invention is to prevent debris and foreign matter from flowing into a man-made water intake channel of the type used to supply large quantities of water to large industrial installations, such as nuclear power plants, fossil fuel power plants, or factories. To this end, such intake screens are disposed over the entrance of the man-made channels and the lake, river or ocean which supplies this channel with water. The purpose of the screen is to prevent debris in the form of tree limbs, leaves, or aquatic life (fish, turtles, shellfish, etc.) from flowing down into the man-made channel and impairing the function of the machinery that the water in the channel ultimately serves.

While some intake screens are simply constructed from a single panel of screen that is mounted in the entrance way of the man-made channel, most such intake screen designs employ an endless loop of screen material which may be in the form of a flexible belt of screening material stretched between two rollers driven by a drive train, a drum of screen material that is rotated along its axis in the entrance way of the channel, or even a series of articulated screen panels which are endlessly driven around a loop by a sprocket and chain drive. In most of these endless loop intake screen designs, a plurality of water spray nozzles are employed to remove the debris and foreign matter which inevitably becomes entrained within the screen material. These nozzles generate a series of water jets which impinge upon the screen material above the level of the water in the channel. A trough located on the side of the screen opposite from the water jets collects the debris dislodged from the screen by these jets.

Unfortunately, such water-jet cleaning devices have not proven to be entirely effective in removing all debris and foreign matter from such endless-loop intake screens. While these jets may remove most of the debris that engages the screen material, they can fail to remove certain types of debris, such as irregularly shaped tree branches, or gelatinous, decaying animal or plant matter. Over a period of time, the screen can become so obstructed with such hard-to-dislodge debris that it becomes necessary to shut down the screen drive, and to manually clean it. The manual cleaning of such a screen is, of course, a time consuming and often expensive procedure.

Clearly, a new technique for cleaning such intake screens is needed which continuously and reliably removes all debris and other foreign matter which becomes lodged into the screen in order to obviate such periodic and expensive manual cleaning operations. Ideally, such a technique should be reasonably inexpensive, and adaptable to a variety of intake screen designs. Finally, it would be desirable if such a technique did not in any way damage the intake screen, or reduce its useful life span.

The invention in its broad form resides in an apparatus (1) for cleaning an intake screen (3) of a power station, the intake screen disposed between a channel (5) and a body of water (7), the intake screen having a mesh size sufficient to prevent passage of debris, comprising a pressure pulse generator (30) for generating shock waves in the water surrounding the screen in order to loosen and remove debris from the screen, said pressure pulse generator having an output (48) for discharging a pulse of pressurized gas, and an elongated manifold (32) having an open end (62) connected to said output, a closed end (64), and a plurality of nozzle apertures (34) along its longitudinal axis that are directed at the screen, said nozzle apertures being arranged in a staggered configuration along its longitudinal axis to uniformly distribute said shock waves across the intake screen; and a debris removal assembly (36) for capturing and removing the debris loosened from the screen, said debris removal assembly being disposed in opposition to the nozzle apertures of the manifold on the other side of the screen, said removal assembly including a foraminous net (40) at least 65% open for capturing debris and for conducting the shock waves emanated through the nozzle apertures (34) of the manifold.
Figure 1 is a perspective view of the pressure pulse system for cleaning intake screens as it would appear applied to a rotary-type intake screen;
Figure 2 is a front, cross-sectional view of the system illustrated in Figure 1 along the line 2-2;
Figure 3 is a plan, cross-sectional view of the pressure pulse cleaning system illustrated in Figure 2 along the line 3-3;
Figure 4 is a cross-sectional side view of the pressure pulse cleaning system illustrated in Figure 3 along the line 4-4;
Figure 5 is a perspective view of both the manifold that is connected to the open end of the pressure pulse generator, and the net of the debris removal assembly;
Figure 6 is a back view of the pressure pulse cleaning system illustrated in Figure 1 along the line 6-6, showing the back of the dumping frame and the upper ends of the guide rails of the debris removal assembly, and
Figure 7 is a cross-sectional side view of the dumping frame and upper ends of the guide rails of the debris removal assembly along the line 7-7 in Figure 6.

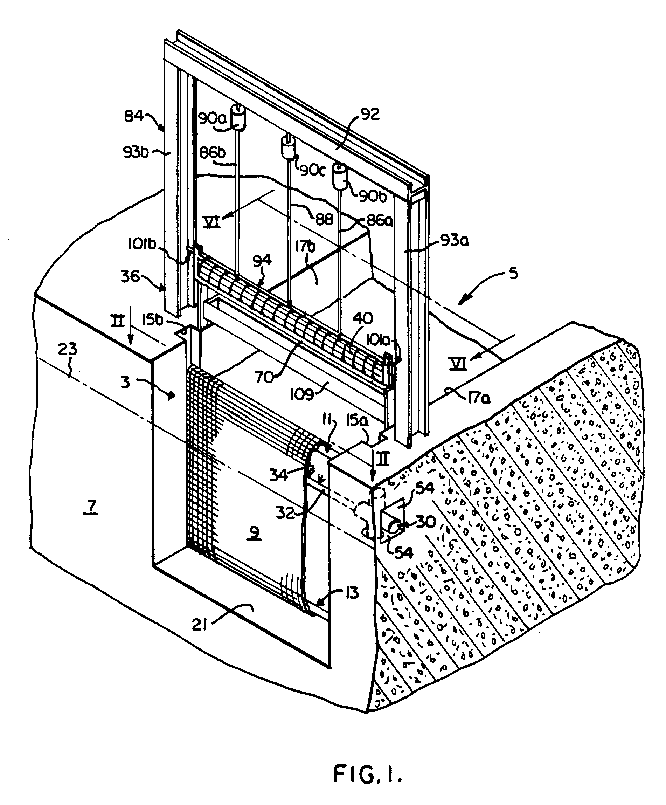

Figures 1, 2 and 3 illustrate how the pressure pulse cleaning system 1 may be applied to a rotary intake screen 3 disposed between a man-made intake channel 5 constructed of poured concrete, and a body of water 7 which may be a lake, river or the ocean. Such rotary intake screens 3 generally comprise an endless belt of screen mesh 9 looped around an upper roller 11, and a lower roller 13. The ends of the rollers 11,13 are rotatably mounted within recesses 15a,b in the sidewalls 17a,b of the channel 5. Similarly, the lower half of the lower roller 13 is mounted within a recess 19 disposed in the front portion of the floor 21 of the channel 5. Since the water level 23 is normally below the upper end of the upper roller 11, no water can enter the channel 5 without first flowing through both the upstream section 25 and downstream section 27 of the endless belt of screen 9.

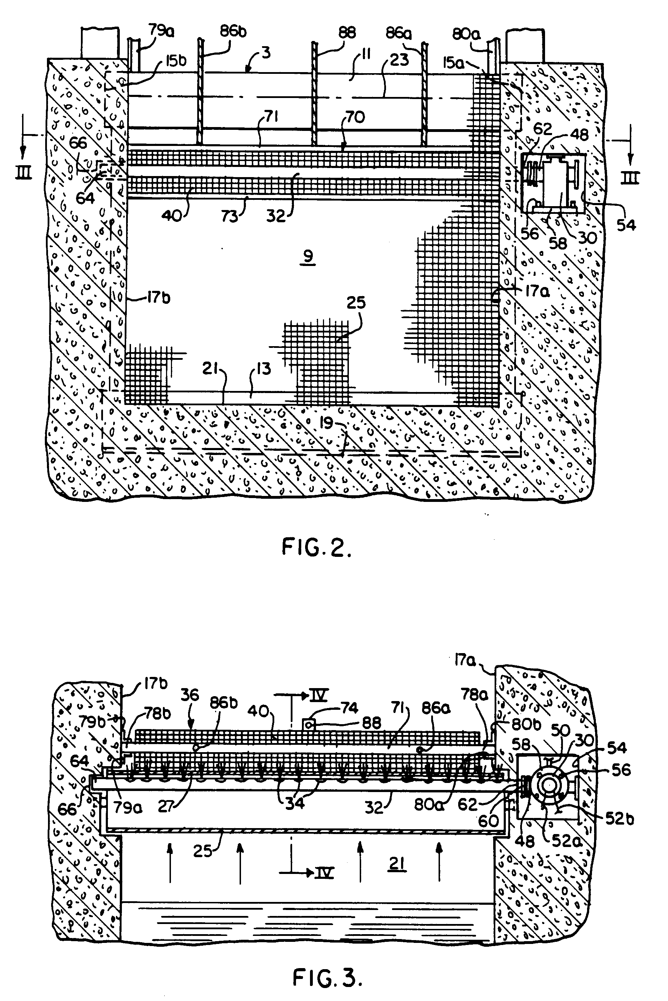

With specific reference now to Figures 2 and 3, the first major component of the system 1 comprises a pressure pulse generator 30 whose output is connected to an elongated, tubular manifold 32. Manifold 32 includes a plurality of nozzle apertures 34 disposed along its longitudinal axis for directing a number of shock waves generated by compressed air leaving the pressure pulse generator 30 along the width of the downstream section 27 of screen 9. The second major component of the system 1 is a debris removal assembly 36 whose principal component is a movable net 40 whose concave side is disposed in opposition to the nozzle apertures 34 of the manifold 32 on the other side of the downstream section 27 of screen 9. As is discussed in more detail hereinafter, the principle purpose of the movable net 40 is to capture and remove debris and other foreign matter broken loose from the screen 9 by the action of the shock waves emanated through the nozzle apertures 34 of the manifold 32.

In the preferred embodiment, the pressure pulse generator 30 is a PAR 600B air gun manufactured by Bolt Technology, Inc. located in Norwalk, Connecticut, U.S.A. Such air guns include an outlet 48 for discharging an explosive burst of compressed gas into water which creates shock waves intense enough to effectively clean the screen 9. While any one of a number of air guns would suit the purposes of the invention, it is preferred that the air gun used for the pressure pulse generator 30 have an internal capacity of between 8193.5 and 9832.2 cubic cm. An air hose 50 is connected to the main cylinder of the pressure pulse generator 30 for conducting compressed air to the generator. The pressure pulse generator 30 further has a pair of electrical control leads 52a,b which, in the preferred embodiment, are ultimately connected to a model FC100 controller again manufactured by Bolt Technology, Inc. The pressure pulse generator 30 is disposed within a recess 54 located in the sidewall 17a of the channel 5. This recess 54 connects with the recess 15a that houses the right ends of the upper and lower rollers 11 and 13 of the rotary intake screen 3. Since the blast of compressed air which periodically emanates from the outlet 54 exerts reactive forces on the air gun that forms the pressure pulse generator 30, a plurality of bolts 56 are provided to secure the base 58 of the generator 30 onto the floor of the recess 54. Additionally, the right side of the generator 30 abuts against the right hand wall of the recess 54.

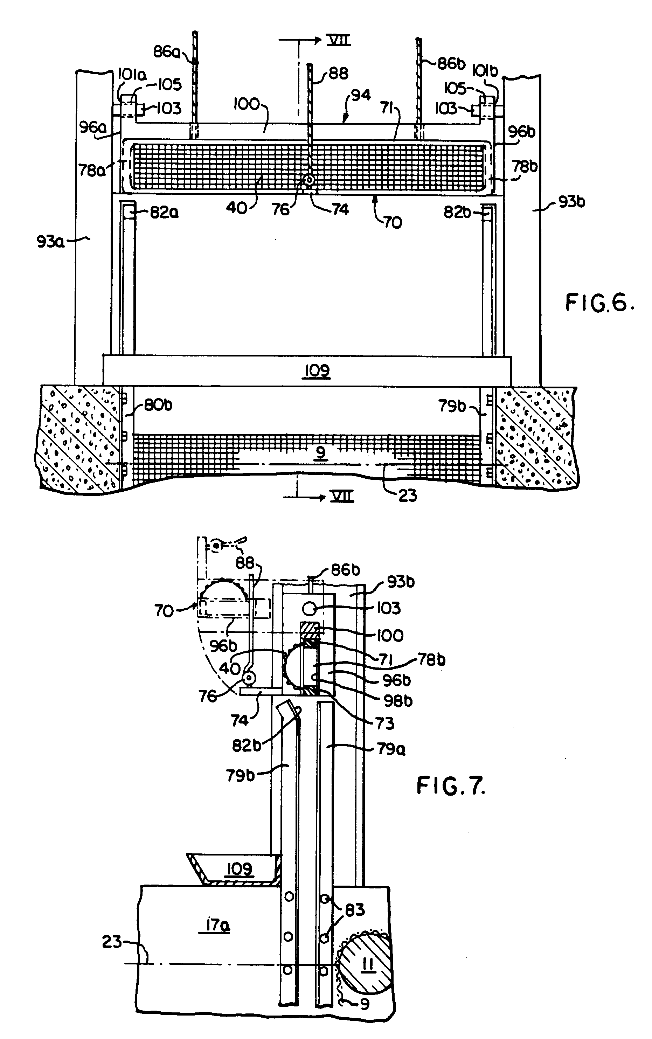

A coupling 60 connects the outlet 48 of the pressure pulse generator 30 to the open end 62 of the manifold 32. Manifold 32 further includes a closed end 64 which is received within a recess 66 in the sidewall 17b. The secure mounting of the manifold 32 between the coupling 60 and the recess 66 is necessary to prevent the manifold 32 from moving in response to the reactive forces generated against it when it fires high velocity shock waves of air and gun through each of its various nozzle apertures 34. As may best be seen with respect to Figure 5, the nozzle apertures 34 are arranged in a staggered configuration with respect to the longitudinal axis of the manifold 32 so that the high velocity jets of air and water that emanate through each of the apertures 34 will overlap to some extent. Such overlapping insures that the entire width of the screen 9 will be exposed to the shock waves emanating through the manifold 32. Additionally, the cross-sectional area of the apertures 34 increases as one moves from the open end 62 nearest the outlet 48 of the pressure pulse generator toward the closed end 64. The provision of such increasing cross-sectional areas compensates for the weakening of the shock waves generated by the pressure pulse generator 30 as they travel along the longitudinal axis of the manifold 32, such that the cleaning efficacy of the shock waves created by the high velocity jets of air and water leaving each of the nozzle apertures 34 is substantially equal throughout the length of the manifold 32. Each of the nozzle apertures 32 is, of course, substantially orthogonally oriented with respect to the downstream section 27 of the screen 9 to maximize the strength of the impact of the shock waves emanated therefrom. Both the pressure pulse generator 30 and the manifold 32 are located well below the water level 23 in the channel 5 so that water is constantly present within the manifold 32 and around the outlet 48 of the generator 30 to fill them between pressure pulses.

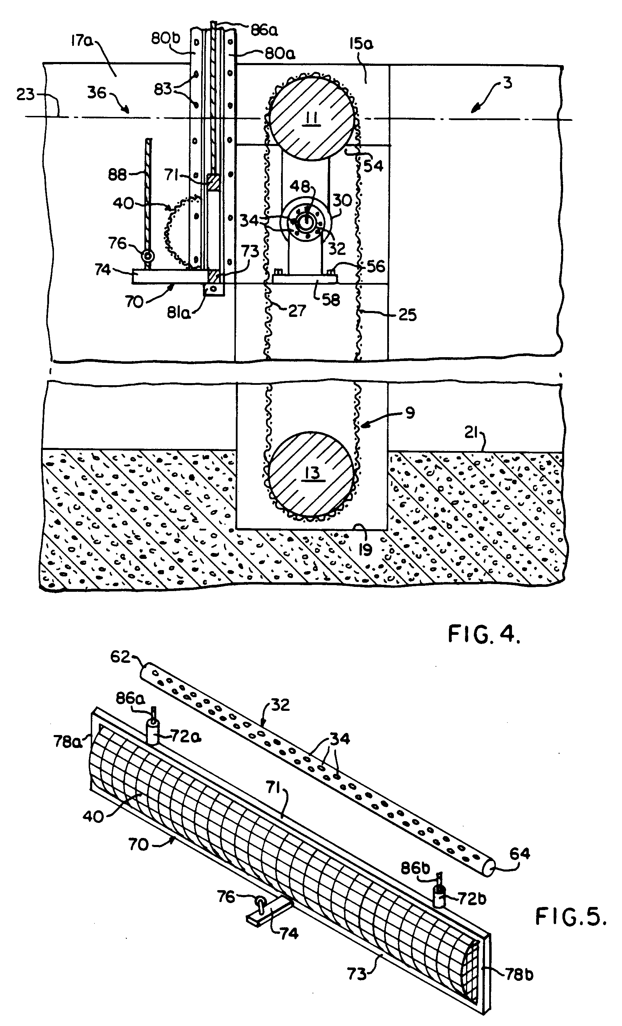

With reference now to Figures 4, 5 and 6, the debris removal assembly 36 includes a rectangular net frame 70 for supporting the edges of the net 40 around the portion of the downstream section 27 onto which the nozzle apertures 34 of the manifold 32 are directed. The net 40 retained by the frame 70 may be formed from a resilient plastic material, such as nylon. Alternatively, the net 40 may be formed from non-corrosive wire mesh, such as stainless steel. In either case, it is important that the mesh of the net 40 be relatively open, (i.e, greater than 65 percent) so that the shock waves generated by the high pressure jets of air and water emanated by the nozzle apertures 34 do not apply significant large forces on the net 40 itself, and thereby damage it. While the use of stain-less steel wire advantageously forms a more rigid net 40 that is easy to dump, the use of a resilient, plastic material such as nylon affords a net structure that is more yieldable in response to the shock waves generated by the nozzle apertures 34 of the manifold 32, and thereby potentially longer lived.

The net frame 70 of the debris removal assembly 36 includes an upper support member 71, having a pair of cable couplings 72a,b which in turn allow the entire frame 70 to be coupled onto the cables of a trolley crane assembly that lifts and lowers the frame 70 with respect to the position of the manifold 32. The net frame 70 also includes a lower support member 73 having a dumping bar 74 orthogonally disposed thereto for a purpose which will become apparent presently. Like the previously discussed upper support member 71, the dumping bar 74 also includes a cable coupling 76. Finally, the net frame 70 includes a pair of side members 78a,b. The side members 78a,b are preferably integrally formed with the upper and lower support member 71 and 73 as shown.

The debris removal assembly 36 is provided with two separate pairs of guide rails 79a,b and 80a,b located on the sidewalls 17a,b or the channel 5 respectively. Each pair of guide rails 79a,b and 80a,b includes a pair of opposing flanges for slidably receiving the side member 78a,b of the net frame 70. Stops 81a,b are provided at the lower ends of each of the pairs of guide rails 79a,b and 80a,b for defining the lower limit of travel of the net frame 70. As is evident in Figure 4, when the lower support member 73 of the net frame 70 rests against the stops 81,82, the net 40 is properly positioned in opposition to the nozzle apertures 34. At the upper ends of each of the outer guide rails 79b, and 80b, a tapered lead-in portion 82a,b is provided, respectively, as may best be seen with respect to Figures 6 and 7. The purpose of these lead-in portions 82a,b is to allow the two pairs of guide rails 79a,b and 80a,b to easily receive the lower edge of the net frame 70 when the frame 70 is lowered down from its upper most position within the dumping frame of the debris removal assembly 36, which will be discussed shortly. In the preferred embodiment, each of the guide rails 79a,b and 80a,b is a simple angle iron formed from two orthogonal flanges of steel, one of which is secured onto the side walls of the channel 5 by means of bolts 83.

With reference now to Figures 1, 6 and 7, the debris removal assembly 36 further includes a trolley crane 84 for lifting and lowering the frame 70 of the net 40 so that it can be periodically dumped of the debris and foreign matter that it accumulates over time. To this end, the trolley crane 84 is provided with a pair of lifting and lowering cables 86a,b which are in turn connected to the cable coupling 72a,b of the upper support member 71 of the frame 70. Additionally, a dumping cable 88 is detachably connected onto the dumping bar 74 by means of coupling 76. Each of the cables 86a,b and 88 is connected to a cable drive mechanism 90a,b,c which in turn are slidably mounted on the under side of the upper rail 92 of the crane 84. This upper rail 92 is, of course, supported by a pair of side columns 93a,b which are preferably in the form of I beams.

The debris removal assembly 34 further has a dumping frame 94 for pivotally swinging the net 40 into a dumping position over a trough 109 in order to empty it of its contents. The dumping frame 94 includes a pair of side legs 96a,b, each of which has a recess 98a,b for receiving the side member 78a,b of the net frame 70. These side legs 96a,b are interconnected by means of a support beam 100. Mounting assemblies 101a,b pivotally mount each of the side legs 96a,b of the dumping frame 94 to the side columns 93a,b of the crane 84. Each of these mountings is in turn formed from a mounting pin 103 disposed within a bearing 105 located within each of the side legs 96a,b. Finally, the debris removal assembly 36 is provided with the previously mounted trough 109 which is disposed over the channel 5 in abutment with the outer rails 79b, 80b, and directly under the net 40 when the dumping cable 88 swings the dumping frame 94 into the position illustrated in phantom in Figure 7.

In the method of the invention, the net frame 70 is lowered into the position illustrated in Figure 4 by the crane 84. A drive train (not shown) turns both of the rollers 11 and 13 counterclockwise (as seen from Figure 4) so that the upstream section 25 of the screen 9 is constantly moving upwardly and the downstream section 27 of the screen 9 is constantly moving downwardly. Such counterclockwise rotation of the rollers 11 and 13 prevents debris from becoming caught between the front edge of the lower roller 13, and the edge of the recess 19, which in turn could cause the roller 13 to seize, thereby stopping the rotation of the screen 9 all together.

As the rollers 11,13 rotate, some debris and foreign matter periodically becomes entrained within the mesh of the endless belt of screen 9. Eventually, this entrained debris will confront the nozzle apertures 34 of the manifold 32. In the preferred mode of operation, the frequency of the firing rate of the pressure pulse generator 30 is coordinated with the rotational speed of the screen 9 such that every portion of the screen 9 is ultimately impinged by the periodic shock waves that emanate through the nozzle apertures 32. A typically pulse firing frequency would be once every 30 seconds. Hence, when a section of the screen 9 that contains a lodgment of debris is ultimately positioned between the manifold 32 and the screen 40 as a result of the rotation of the rollers 11,13, this debris will be forcibly struck by shock waves generated by a combination of air and water emitted through the nozzle apertures 34. These shock waves will not only dislodge such debris; they will further push the debris into the C-shaped net 40.

To insure that the shock waves emanating through the nozzle apertures 34 are powerful enough to effectively remove all lodged debris and foreign matter, the 8193.5 to 9832.2 cubic cm. of compressed air that leaves the outlet 48 of the pressure pulse generator 30 is preferably compressed to between 6.89 MPa and 20.68 MPa, and possibly even up to as high as 34.47 MPa. The predominately open nature of the net 40 allows it to withstand the momentary forces applied to it by the resulting powerful shock waves without damage, since there is little area for these shock waves to react against. To insure that the net 40 will capture debris and other foreign matter dislodged from the screen 9, the mesh of the net 40 should be made to be somewhat smaller than the mesh of the endless belt of screen 9.

After the net 40 has had an opportunity to accumulate a significant amount of debris, the drive train which rotates the upper and lower rollers 11,13 of the rotary intake screen 3 is temporarily stopped, and the cable drives 90a,b of the trolley crane 84 are actuated to lift the frame 70 of the net 40 into the position illustrated in Figure 7. After this has been accomplished, the cable drives 90a,b are deactuated, and the cable drive 90c is actuated to pull the dumping cable 88 upwardly so that the dumping frame 94 assumes the position illustrated in phantom. The pivoting of the net frame 70 causes the debris captures therein to fall into the trough 109, after which the cable drives 90a,b,c are actuated to pivot the dumping frame 94 back into the position illustrated in Figure 7, to further lower the frame 70 back into the position illustrated in Figure 4. Once the frame 70 has been returned to its initial position, the drive train of the rotary intake screen 3 is re-actuated to rotate the upper and lower rollers 11,13 once again in a counterclockwise direction.

## Claims

1. An apparatus (1) for cleaning an intake screen (3) of a power station, the intake screen disposed between a channel (5) and a body of water (7), the intake screen having a mesh size sufficient to prevent passage of debris, comprising:
a pressure pulse generator (30) for generating shock waves in the water surrounding the screen in order to loosen and remove debris from the screen, said pressure pulse generator having an output (48) for discharging a pulse of pressurized gas, and an elongated manifold (32) having an open end (62) connected to said output, a closed end (64), and a plurality of nozzle apertures (34) along its longitudinal axis that are directed at the screen, said nozzle apertures being arranged in a staggered configuration along its longitudinal axis to uniformly distribute said shock waves across the intake screen; and
a debris removal assembly (36) for capturing and removing the debris loosened from the screen, said debris removal assembly being disposed in opposition to the nozzle apertures of the manifold on the other side of the screen, said removal assembly including a foraminous net (40) of smaller mesh size than intake screen (3), being at least 65% open for capturing the debris and for conducting the shock waves emanated through the nozzle apertures (34) of the manifold.

2. An apparatus (1) for cleaning an intake screen (3) as defined in claim 1, wherein the cross sectional area of the apertures (34) increases along the longitudinal axis of the manifold (32) from the open end (62) thereof connected to the pressure pulse generator (30) to the closed end (64) thereof to equilibrate the flow of fluid through said nozzle apertures (34).

3. An apparatus (1) for cleaning an intake screen (3) a defined in claim 2, wherein said removal assembly (36) is further characterized by a frame (94) for supporting the edges of said net (40) adjacent to a portion of said intake screen (3) around said manifold (32).

4. An apparatus (1) for cleaning an intake screen (3) as defined in claim 1, wherein said removal assembly (36) is further characterized by guide rails (79a, 80a) for guiding and supporting the frame (94) into a position adjacent to said intake screen (3) and around said manifold (32).

5. An apparatus (1) for cleaning an intake screen (3) as defined in claim 4, wherein said removal assembly (36) is further characterized by a lifting and lowering cables (86a,b) for lifting and lowering said frame (94) along said rails (79a, 80a) into a position adjacent to the intake screen (3) and around said manifold (32).

6. An apparatus (1) for cleaning an intake screen (3) as defined in claim 2, wherein said net (40) is a resilient material that flexes in response to said shock waves without breaking.

7. A method for cleaning an intake screen (3) of a power station, the screen being disposed between a channel (5) and a body of water (7) by means of a pressure pulse generator (30) having an outlet (48), the screen having a mesh size sufficient to prevent passage of debris, comprising the steps of: positioning the outlet (48) of the pressure pulse generator under the surface of the surrounding water and adjacent to said intake screen, the pressure pulse generator having an output (48) for discharging a pulse of pressurized gas, and an elongated manifold (32) having an open end (62) connected to the output, a closed end (64), and a plurality of nozzle apertures (34) along its longitudinal axis that are directed at the screen, the nozzle apertures being arranged in a staggered configuration along its longitudinal axis to uniformly distribute the shock waves across the intake screen, and discharging pulses of pressurized gas through the outlet to generate shock waves that loosen and remove debris from the screen, a debris removal assembly being disposed in opposition to the nozzle apertures of the manifold on the other side of the screen, the removal assembly including a foraminous net (40) of smaller mesh size than the intake screen (3), being at least 65% open for capturing the debris and for conducting the shock waves emanated through the nozzle apertures (34) of the manifold.

8. A method for cleaning an intake screen (3) as defined in claim 7, wherein said gas is pressurized between 6.89 and 20.68 MPa before being discharged to generate said shock waves.

9. A method for cleaning an intake screen (3) as defined in claim 7, wherein the volume of gas discharged is between about 1638.7 to 16387.1 cubic cm.

10. A method for cleaning an intake screen (3) as defined in claim 7, further including the step of dispersing the shock waves generated by the pressure pulse generator (30) substantially over the width of the screen (3) to uniformly remove debris along said width.

11. A method for cleaning an intake screen (3) as defined in claim 7, further including the step of removing the debris loosened from the screen (3) from the water (7) surrounding the screen (3) to insure that the debris does not become re-entrained in the screen (3).

12. A method for cleaning an intake screen (3) as defined in claim 10, wherein said shock waves are dispersed by directing the pulses discharged from the outlet (48) of the pressure pulse generator (30) into a manifold (32).

## Patentansprüche

1. Vorrichtung (1) zur Reinigung eines Einlaßfilters (3) eines Kraftwerks, wobei der Einlaßfilter zwischen einem Kanal (5) und einer Wassermasse (7) angeordnet ist, der Einlaßfilter eine Maschengröße hat, die ausreicht, um Durchgang von Schutt zu verhindern, wobei die Vorrichtung folgendes umfasst:
einen Druckpulserzeuger (30), um Stoßwellen in dem Wasser, das den Filter umgibt, zu erzeugen, um Schutt von dem Filter zu lösen und zu entfernen, wobei der Druckpulserzeuger einen Ausgang (48) hat, um einen Puls von Druckgas zu entlassen, und einen langgestreckten Rohrverteiler (32) mit einem offenen Ende (62), das an den Ausgang angeschlossen ist, einem geschlossenen Ende (64), und einer Vielzahl von Düsenöffnungen (34) entlang seiner Längsachse, die auf den Filter gerichtet sind, wobei die Düsenöffnungen entlang ihrer Längsachse in einem versetzten Aufbau angeordnet sind, um die Stoßwellen gleichförmig Ober dem Einlaßfilter zu verteilen; und
eine Schuttentfernungsanordnung (36), um den Schutt, der von dem Filter gelöst wurde, einzufangen und zu entfernen, wobei die Schuttentfernungsanordnung gegenüber de Düsenöffnungen des Rohrverteilers auf der anderen Seite des Filters angeordnet ist, wobei die Entfernungsanordnung ein poröses Netz (40) mit kleinerer Maschengröße als der Einlaßfilter (3) einschließt, das wenigstens 65% offen ist, um den Schutt einzufangen, und um die durch die Düsenöffnungen (34) des Rohrverteilers ausgestrahlten Stoßwellen zu leiten.

2. Vorrichtung (1) zur Reinigung eines Einlaßfilters (3) nach Anspruch 1, in der sich das Querschnittsgebiet der Öffnungen (34) entlang der Längsachse des Rohrverteilers (32) von seinem offenen Ende (62), das an den Druckpulserzeuger (30) angeschlossen ist, zu seinem geschlossenen Ende (64) vergrößert, um den Flüssigkeitsstrom durch die Düsenöffnungen (34) auszugleichen.

3. Vorrichtung (1) zur Reinigung eines Einlaßfilters (3) nach Anspruch 2, in der die Entfernungsanordnung (36) weiterhin durch einen Rahmen (94) gekennzeichnet ist, um die Ränder des Netzes (40) neben einem Teil des Einlaßfilters (3) um den Rohrverteiler (32) zu tragen.

4. Vorrichtung (1) zur Reinigung eines Einlaßfilters (3) nach Anspruch 1, in der die Entfernungsanordnung (36) weiterhin durch Führungsschienen (79a, 80a) gekennzeichnet ist, um den Rahmen (94) in eine Stellung neben den Einlaßfilter (3) und um den Rohrverteiler (32) zu führen und zu unterstützen.

5. Vorrichtung (1) zur Reinigung eines Einlaßfilters (3) nach Anspruch 4, in der die Entfernungsanordnung (36) weiterhin durch Hebe- und Senkkabel (86a,b) gekennzeichnet ist, um den Rahmen (94) entlang den Schienen (79a, 80a) in eine Stellung neben den Einlaßfilter (3) und um den Rohrverteiler (32) zu heben und zu senken.

6. Vorrichtung (1) zur Reinigung eines Einlaßfilters (3) nach Anspruch 2, in der das Netz (40) ein elastisches Material ist, das sich in Reaktion auf die Stoßwellen biegt, ohne zu brechen.

7. Verfahren zur Reinigung des Einlaßfilters (3) eines Kraftwerks, wobei der Filter zwischen einem Kanal (5) und einer Wassermasse (7) angeordnet ist, mittels eines Druckpulserzeugers (30) mit einem Auslaß (48), wobei der Filter eine Maschengröße hat, die ausreicht, um Durchgang von Schutt zu verhindern, wobei das Verfahren die folgenden Schritte umfasst: Anordnung des Auslasses (48) des Druckpulserzeugers unter der Oberfläche des umgebenden Wassers und neben dem Einlaßfilter, wobei der Druckpulserzeuger einen Ausgang (48) hat, um einen Puls von Druckgas zu entlassen, und einen langgestrecken Rohrverteiler (32) mit einem offenen Ende (62), das an den Ausgang angeschlossen ist, einem geschlossenen Ende (64), und einer Vielzahl von Düsenöffnungen (34) entlang seiner Längsachse, die auf den Filter gerichtet sind, wobei die Düsenöffnungen in einem versetzten Aufbau entlang ihrer Längsachse angeordnet sind, um die Stoßwellen gleichförmig über dem Einlaßfilter zu verteilen, und Pulse von Druckgas durch den Auslaß zu entlassen, um Stoßwellen zu erzeugen, die Schutt von dem Filter lösen und entfernen, wobei eine Schuttentfernrnngsanordnung gegenüber den Düsenöffnungen des Rohrverteilers auf der anderen Seite des Filters angeordnet ist, die Entfernungsanordnung ein poröses Netz (40) mit kleinerer Maschengröße als der Einlaßfilter (3) einschließt, das wenigstens 65% offen ist, um den Schutt einzufangen, und um die durch die Düsenöffnungen (34) des Rohrverteilers ausgestrahlten Stoßwellen zu leiten.

8. Verfahren zur Reinigung eines Einlaßfilters (3) nach Anspruch 7, in dem das Gas zwischen 6,89 und 20,68 MPa unter Druck gesetzt ist, bevor es entlassen wird, um die Stoßwellen zu erzeugen.

9. Verfahren zur Reinigung eines Einlaßfilters (3) nach Anspruch 7, in dem das entlassene Gasvolumen ungefähr zwischen 1638,7 und 16387,1 Kubikzentimeter liegt.

10. Verfahren zur Reinigung eines Einlaßfilters (3) nach Anspruch 7, das weiterhin den Schritt einschließt, die von dem Druckpulserzeuger (30) erzeugten Stoßwellen im wesentlichen Ober der Breite des Filters (3) zu verteilen, um Schutt gleichförmig entlang der Breite zu entfernen.

11. Verfahren zur Reinigung eines Einlaßfilters (3) nach Anspruch 7, das weiterhin den Schritt einschließt, den von dem Filter (3) gelösten Schutt von dem Wasser (7), das den Filter (3) umgibt, zu entfernen, um sicherzustellen, daß der Schutt nicht wieder in dem Filter (3) mitgeführt wird.

12. Verfahren zur Reinigung eines Einlaßfilters (3) nach Anspruch 10, in dem die Stoßwellen verteilt werden, indem die von dem Auslaß (48) entlassenen Pulse vom Druckpulserzeuger (30) in einen Rohrverteiler (32) gerichtet werden.

## Revendications

1. Appareil (1) pour nettoyer un filtre d'admission (3) d'une centrale d'énergie, le filtre d'admission étant placé entre un canal (5) et un plan d'eau (7), le filtre d'admission ayant une taille de maille suffisante pour empêcher le passage de débris, qui comprend :
- un générateur (30) d'impulsions de pression qui produit des ondes de choc dans l'eau entourant le filtre afin de détacher et éliminer les débris du filtre, ledit générateur d'impulsions de pression comportant une sortie (48) pour décharger une impulsion de gaz sous pression et un collecteur allongé (32) qui comporte une extrémité ouverte (62) reliée à ladite sortie, une extrémité fermée (64) et une pluralité d'orifices d'éjection (34) le long de son axe longitudinal qui sont dirigés vers le filtre, lesdits orifices d'éjection étant disposés en quinconce suivant l'axe longitudinal pour répartir uniformément lesdites ondes de choc sur le filtre d'admission, et
- un ensemble (36) d'élimination des débris qui capture et élimine les débris détachés du filtre, ledit ensemble d'élimination des débris étant placé en vis-à-vis des orifices d'éjection du collecteur sur l'autre côté du filtre, ledit ensemble d'élimination contenant un filet à trous (40) dont la taille de maille est plus petite que celle du filtre d'admission (3) et qui est ouvert à 65% au moins pour capturer les débris et acheminer les ondes de choc émanant par les orifices d'éjection (34) du collecteur.

2. Appareil (1) pour nettoyer un filtre d'admission (3) selon la revendication 1, dans lequel la section des orifices (34) augmente le long de l'axe longitudinal du collecteur (32), de l'extrémité ouverte (62) de celui-ci qui est raccordée au générateur (30) d'impulsions de pression à son extrémité fermée (64), pour équilibrer l'écoulement de fluide par lesdits orifices d'éjection (34).

3. Appareil (1) pour nettoyer un filtre d'admission (3) selon la revendication 2, dans lequel ledit ensemble d'élimination (36) est caractérisé en outre par un cadre (94) destiné à soutenir les bords dudit filet (40) adjacents à une partie dudit filtre d'admission (3) autour dudit collecteur (32).

4. Appareil (1) pour nettoyer un filtre d'admission (3) selon la revendication 1, dans lequel ledit ensemble d'élimination (36) est caractérisé en outre par des rails de guidage (79a, 80a) destinés à guider et soutenir le cadre (94) pour l'amener dans une position adjacente audit filtre d'admission (3) et autour dudit collecteur (32).

5. Appareil (1) pour nettoyer un filtre d'admission (3) selon la revendication 4, dans lequel ledit ensemble d'élimination (36) est caractérisé en outre par des câbles (86a, b) de soulèvement et abaissement qui servent à soulever et abaisser ledit cadre (94) le long desdits rails (79a, 80a) pour l'amener dans une position adjacente audit filtre d'admission (3) et autour dudit collecteur (32).

6. Appareil (1) pour nettoyer un filtre d'admission (3) selon la revendication 2, dans lequel ledit filet (40) est un matériau élastique qui fléchit en réponse auxdites ondes de choc sans se rompre.

7. Procédé pour nettoyer un filtre d'admission (3) d'une centrale d'énergie, le filtre d'admission étant placé entre un canal (5) et un plan d'eau (7), au moyen d'un générateur (30) d'impulsions de pression comportant une sortie (48), le filtre d'admission ayant une taille de maille suffisante pour empêcher le passage de débris, procédé qui comprend les étapes consistant à : placer la sortie (48) du générateur d'impulsions de pression sous la surface de l'eau environnante, adjacente audit filtre d'admission, ledit générateur d'impulsions de pression comprenant une sortie (48) pour décharger une impulsion de gaz sous pression et un collecteur allongé (32) qui comporte une extrémité ouverte (62) reliée à ladite sortie, une extrémité fermée (64) et une pluralité d'orifices d'éjection (34) le long de son axe longitudinal qui sont dirigés vers le filtre, lesdits orifices d'éjection étant disposés en quinconce suivant l'axe longitudinal pour répartir uniformément lesdites ondes de choc sur le filtre d'admission; et décharger des impulsions de gaz sous pression par la sortie pour produire des ondes de choc qui détachent et éliminent les débris du filtre, un ensemble d'élimination des débris étant placé en vis-à-vis des orifices d'éjection du collecteur sur l'autre côté du filtre, ledit ensemble d'élimination contenant un filet à trous (40) dont la taille de maille est plus petite que celle du filtre d'admission (3) et qui est ouvert à 65% au moins pour capturer les débris et acheminer les ondes de choc émanant par les orifices d'éjection (34) du collecteur.

8. Procédé pour nettoyer un filtre d'admission (3) selon la revendication 7, dans lequel ledit gaz est porté à une pression comprise entre 6,89 et 20,68 MPa avant d'être déchargé pour produire lesdites ondes de choc.

9. Procédé pour nettoyer un filtre d'admission (3) selon la revendication 7, dans lequel le volume de gaz déchargé vaut entre 1638,7 et 16387,1 cm³ environ.

10. Procédé pour nettoyer un filtre d'admission (3) selon la revendication 7, comprenant en outre l'étape consistant à répartir les ondes de choc produites par le générateur (30) d'impulsions de pression sensiblement sur toute la largeur du filtre (3) afin d'éliminer uniformément les débris sur cette largeur.

11. Procédé pour nettoyer un filtre d'admission (3) selon la revendication 7, comprenant en outre l'étape consistant à éliminer les débris détachés dudit filtre (3) de l'eau (7) qui entoure le filtre (3) pour garantir que les débris ne sont pas entraînés de nouveau dans le filtre (3).

12. Procédé pour nettoyer un filtre d'admission (3) selon la revendication 10, dans lequel lesdites ondes de choc sont réparties par envoi dans un collecteur (32) des impulsions déchargées par la sortie (48) du générateur (30) d'impulsions de pression.
